# EUROPÄISCHE PATENTSCHRIFT

(11) **EP 3 368 237 B1**
(45) Veröffentlichungstag und Bekanntmachung des Hinweises auf die Patenterteilung: **15.12.2021**
(21) Anmeldenummer: 17702810.7
(22) Anmeldetag: 26.01.2017
(51) Int. Cl.: B22F 5/00, B22F 5/04, C22C 47/04, C22C 47/14, C22C 49/14, B22F 7/08, C22C 47/06, B22F 10/20, B22F 12/00, C22C 49/08

(54) **VERFAHREN ZUR HERSTELLUNG EINES BAUTEILS FÜR EINE STRÖMUNGSMASCHINE**
METHOD OF MANUFACTURING A COMPONENT FOR A TURBOMACHINE
PROCÉDÉ DE FABRICATION D'UN COMPOSANT POUR UNE TURBOMACHINE

(30) Priorität: 08.02.2016 DE 102016201838
(43) Veröffentlichungstag der Anmeldung: 05.09.2018
(73) Patentinhaber: Siemens Energy Global GmbH & Co. KG, 81739 München (DE)
(72) Erfinder: BURBAUM, Bernd, 14612 Falkensee (DE); NEDDEMEYER, Torsten, 14612 Falkensee (DE)
(86) Internationale Anmeldenummer: PCT/EP2017/051645
(87) Internationale Veröffentlichungsnummer: WO 2017/137262

(56) Entgegenhaltungen:
- EP-A2- 2 962 789
- US-A1- 2007 051 455

## Beschreibung

Die vorliegende Erfindung betrifft ein Verfahren zur Herstellung einer Komponente oder eines Bauteils für eine Strömungsmaschine. Weiterhin umfasst die vorliegende Erfindung das Bauteil und eine Vorrichtung zur Herstellung des Bauteils.

Bei dem Bauteil kann es sich um die Turbinenscheibe handeln. Der Begriff "Turbinenscheibe" ist vorliegend synonym mit Turbinenring oder Rotorscheibe zu verstehen. Das Bauteil kann weiterhin ein Rotorteil oder ein Teil eines Kompressors oder Verdichters einer Gasturbine sein. Weiterhin handelt es sich bei dem Bauteil vorzugsweise um ein additiv oder generativ hergestelltes oder aufgebautes Bauteil.

Bekannte schichtweise, additive oder generative Herstellungsverfahren sind insbesondere das selektive Laserschmelzen (SLM: englisch für "selective laser melting"), selektive Lasersintern (SLS: englisch für "selective laser sintering") und das Elektronenstrahlschmelzen (EBM: englisch für "electron beam melting"). Additive Fertigungsverfahren werden durch ihr iteratives Auf- oder Aneinanderfügen von Lagen, Schicht- oder Volumenelementen, beispielsweise aus einem Pulverbett, zur Herstellung dreidimensionaler individuell geformter Bauteile. Typische Schichtdicken der einzelnen Lagenliegen zwischen 20 µm und 60 µm.

Als Ausgangsmaterialien steht eine Vielzahl unterschiedlicher Werkstoffe, beispielsweise keramische und/oder metallische Werkstoffe, zur Verfügung, die sowohl in Pulver- oder Granulatform, aber auch in Form von Fluiden bspw. als Suspensionen, vorliegen können. Bei generativen Herstellungsverfahren, wird der dreidimensionale Gegenstand durch eine Vielzahl einzelner Materialschichten, die auf einer absenkbaren Bauplattform nacheinander abgeschieden und anschließend einzeln einem lokal selektiven Verfestigungsprozess unterzogen werden, gebildet.

Ein Verfahren zum selektiven Laserschmelzen ist beispielsweise bekannt aus EP 1 355 760 B1, US 2007/051455 A1 oder EP 2 962 789 A2**.**

Turbinenteile sind während ihres Einsatzes oder Betriebs besonders hohen thermischen und/oder mechanischen Belastungen ausgesetzt. Dabei können thermische und mechanische Belastungen einer Gasturbine oder seiner Rotorteile während des Betriebs zusammenhängen, beispielsweise in Form von thermomechanischen Spannungen.

Neben der Entwicklung von immer temperaturresistenten Werkstoffen besteht daher auch ein Bedarf an Materialien, beispielsweise Verbundwerkstoffen, welche verbesserte mechanische Eigenschaften aufweisen. Während in thermisch hochbelasteten Bereichen einer Turbine, beispielsweise mit Temperaturen oberhalb von 600 °C, eine hohe Festigkeit der Materialien gefordert wird, wird insbesondere in inneren Bereichen oder inneren Teilen der Turbine, des Kompressors oder einer entsprechenden Rotorscheibe eine hohe Zähigkeit gefordert.

Es ist daher eine Aufgabe der vorliegenden Erfindung, Mittel anzugeben, die die mechanischen Eigenschaften, insbesondere von rotierbaren Turbinenteilen verbessern und/oder den Betrieb der Turbine zuverlässiger und/oder effizienter zu machen.

Diese Aufgabe wird durch den Gegenstand der unabhängigen Ansprüche gelöst. Vorteilhafte Ausgestaltungen sind Gegenstand der abhängigen Patentansprüche.

Ein Aspekt der vorliegenden Erfindung betrifft ein Verfahren zur Herstellung eines Bauteils für eine Strömungsmaschine, beispielsweise eine Gasturbine, wie eine Rotorscheibe für eine Gasturbine, umfassend das additive Aufbauen des Bauteils mittels eines additiven Herstellungsverfahrens. Insbesondere wird das Bauteil für das additive Aufbauen aus einem Matrix- oder Basismaterial, vorzugsweise einem pulverförmigen Basismaterial, für das Bauteil aufgebaut. Das genannte Material kann ein nickelbasiertes, ein kobaltbasiertes oder ein eisenbasiertes Material sein.

Das Verfahren umfasst weiterhin das Einbringen von Materialfasern in einen Aufbau für das Bauteil während des additiven Aufbauens derart, dass die Materialfasern entlang oder im Wesentlichen entlang einer Umfangsrichtung des Bauteils, vorzugsweise um eine Bauteilachse herum, ausgerichtet sind und derart, dass ein Faserverbundmaterial entsteht, zweckmäßigerweise umfassend die Materialfasern und ein durch das additive Aufbauen verfestigtes Basismaterial, wobei die Materialfasern weiterhin Keramik aus Aluminiumoxid, Mullit, SiBCN, SiCN oder SiC, umfassen.

In einer nicht beanspruchten Ausgestaltung ist das Bauteil ein rotierbares und insbesondere im Betrieb der Strömungsmaschine rotierendes Teil.

In einer nicht beanspruchten Ausgestaltung ist das Bauteil ein rotationssymmetrisches oder im Wesentlichen rotationssymmetrisches Teil der oder für die Strömungsmaschine.

Die Umfangsrichtung bezeichnet vorliegend vorzugsweise eine Richtung, welche einer Rotation- oder Umlaufrichtung des Bauteils in seinem Betrieb, vorzugsweise in seinem Einsatz in der Strömungsmaschine entspricht. Die Umfangsrichtung kann eine Tangentialrichtung sein.

Die Umfangsrichtung kann insbesondere einen Umfang der Bauteilachse beschreiben oder zumindest teilweise eine geometrische Richtungskomponente entlang des Umfangs des Bauteils umfassen.

Der Begriff "Aufbau" kann das Bauteil an sich bezeichnen.

Insbesondere kann damit ein lediglich teilweise (additiv) hergestellter Teil des Bauteils gemeint sein, beispielsweise zu einem Zeitpunkt während einer additiven Herstellung und in einer entsprechenden Anlage oder Vorrichtung zur additiven Herstellung.

Die Materialfasern können hauptsächlich oder überwiegend in oder entlang der Umfangsrichtung ausgerichtet sein oder werden. Beispielsweise können die Materialfasern abgesehen von notwendigen Windungen oder herstellungsbedingten Abweichungen von der Umfangsrichtung entlang dieser Richtung ausgerichtet sein und/oder in den Aufbau eingebracht werden. Jedoch müssen die Materialfasern nicht zwingend konzentrisch zu dem Bauteil oder anderen Fasern ausgerichtet sein oder werden.

Durch das beschriebene Verfahren kann mit besonderem Vorteil ein Faserverbundmaterial bzw. ein Faserverbundwerkstoff zumindest teilweise additiv hergestellt oder aufgebaut, oder die entsprechende Herstellung in einen additiven Fertigungsprozess implementiert werden. Insbesondere können die bekannten Vorteile von Faserverbundwerkstoffen gemäß dem beschriebenen Verfahren für die Herstellung und den Einsatz insbesondere als Rotorteil einer Gasturbine, beispielsweise einer Kompressorscheibe genutzt werden. Beispielsweise kann eine Kriechbeständigkeit oder die Beständigkeit gegen eine Zugbelastung des Bauteils senkrecht zur Faserrichtung durch den Einsatz von Faserverbundwerkstoffen verbessert werden.

Gleichzeitig können dabei synergisch ebenfalls die Vorteile additiver Herstellungstechnologie genutzt werden.

In einer Ausgestaltung ist das additive Herstellungsverfahren ein pulverbett-basiertes additives Herstellungsverfahren.

In einer Ausgestaltung ist das additive Herstellungsverfahren ein Strahlschmelzverfahren.

In einer Ausgestaltung ist das additive Herstellungsverfahren selektives Laserschmelzen, selektives Lasersintern, Elektronenstrahlschmelzen oder Laserauftragschweißen.

In einer Ausgestaltung werden die Materialfasern durch eine robotergeführte oder robotergeführte Einrichtung in den Aufbau für das Bauteil eingebracht.

In einer Ausgestaltung werden die Materialfasern, beispielsweise entlang einer Aufbaurichtung des Bauteils betrachtet, lediglich in einem, insbesondere zentralen, radialen Bereich des Bauteils und vorzugsweise nicht über die gesamte radiale Ausdehnung hinweg angeordnet oder eingebracht. Insbesondere kann es sich bei diesem Bereich um einen radialen "Taillenbereich" des Bauteils handeln, welcher im Betrieb des Bauteils besonders hohen mechanischen Belastungen ausgesetzt ist.

In einer Ausgestaltung werden die Materialfasern während des additiven Aufbaus miteinander verwoben.

In einer Ausgestaltung wird das Basismaterial zumindest teilweise zwischen den Materialfasern angeordnet.

In einer Ausgestaltung werden die Materialfasern vor dem Einbringen mit einer Beschichtung versehen.

Eine weitere nicht beanspruchte Ausgestaltung betrifft ein Bauteil für eine Strömungsmaschine, wobei das Bauteil durch das beschriebene Verfahren hergestellt oder herstellbar ist.

In einer nicht beanspruchten Ausgestaltung ist das Bauteil ein Rotorteil einer Strömungsmaschine, beispielsweise einer Gasturbine.

In einer nicht beanspruchten Ausgestaltung ist das Bauteil eine Turbinenscheibe, welche zum Halten eines rotierbaren Teils einer Strömungsmaschine im Betrieb ausgebildet ist. Bei dem rotierbaren Teil kann es sich beispielsweise um einer Kompressorschaufel handeln.

Eine weitere nicht beanspruchte Ausgestaltung betrifft eine Turbinenscheibe für eine Strömungsmaschine umfassend, beispielsweise in einen radialen Bereich, insbesondere einem zentralen oder mittleren radialen Bereich und ein Faserverbundmaterial, wie oben beschrieben. Das Faserverbundmaterial umfasst weiterhin die Materialfasern und ein Matrixmaterial, wobei die Materialfasern entlang einer Umfangsrichtung der Turbinenscheibe ausgerichtet sind und wobei die Materialfasern weiterhin Keramik aus Aluminiumoxid, Mullit, SiBCN, SiCN oder SiC umfassen.

Das Matrixmaterial des Faserverbundmaterials bezeichnet vorzugsweise ein - während der oder durch die additive Herstellung verfestigtes - Basismaterial.

In einer Ausgestaltung umfassen die Materialfasern eines oder mehrere der folgenden Materialien: Kohlenstoff, Bor, Basalt und/oder Keramik aus Aluminiumoxid, Mullit, SiBCN, SiCN und SiC.

In einer Ausgestaltung umfasst das Faserverbundmaterial und/oder die Materialfasern Kohlenstoff (C), Siliziumcarbid (SiC) und/oder Aluminiumoxid, beispielsweise Al₂O₃. Das Faserverbundmaterial und/oder die Materialfasern können die genannten Materialien beispielsweise als Hauptbestandteil umfassen.

In einer Ausgestaltung umfasst das Matrix- und/oder Basismaterial, Kohlenstoff, Siliziumcarbid und/oder Aluminiumoxid. Das Matrix- und/oder Basismaterial kann die genannten Materialien beispielsweise als Hauptbestandteil umfassen.

In einer nicht beanspruchten Ausgestaltung umfasst die Beschichtung der Materialfasern insbesondere Kohlenstoff und/oder Bornitrid (BN).

Ein weiterer Aspekt der vorliegenden Erfindung betrifft eine Vorrichtung zur Herstellung eines Bauteils für eine Strömungsmaschine, wobei die Vorrichtung ausgebildet ist, das Bauteil additiv aus einem, beispielsweise pulverförmigen, Basismaterial aufzubauen. Die Vorrichtung umfasst weiterhin eine Einrichtung zum Einbringen von Materialfasern in den Aufbau für das Bauteil derart, dass die Materialfasern entlang der Umfangsrichtung des Bauteils ausgerichtet sind und derart, dass das Faserverbundmaterial entsteht. Das Faserverbundmaterial umfasst zweckmäßigerweise - wie oben beschrieben die Materialfasern und das verfestigte Basismaterial.

Ausgestaltungen, Merkmale und/oder Vorteile, die sich vorliegend auf das Verfahren beziehen, können sich ferner die Vorrichtung und/oder das Bauteil betreffen, und umgekehrt.

Weitere Einzelheiten der Erfindung werden nachfolgend anhand der Zeichnung beschrieben.
- Figur 1: zeigt schematisch eine Aufsicht auf eine Vorrichtung zur additiven Herstellung eines Bauteils für eine Strömungsmaschine.
- Figur 2: zeigt schematisch eine Schnitt- oder Seitenansicht einer Vorrichtung zur additiven Herstellung eines Bauteils für eine Strömungsmaschine.
- Figur 3: zeigt schematisch einen Querschnitt durch eine Turbinenscheibe.

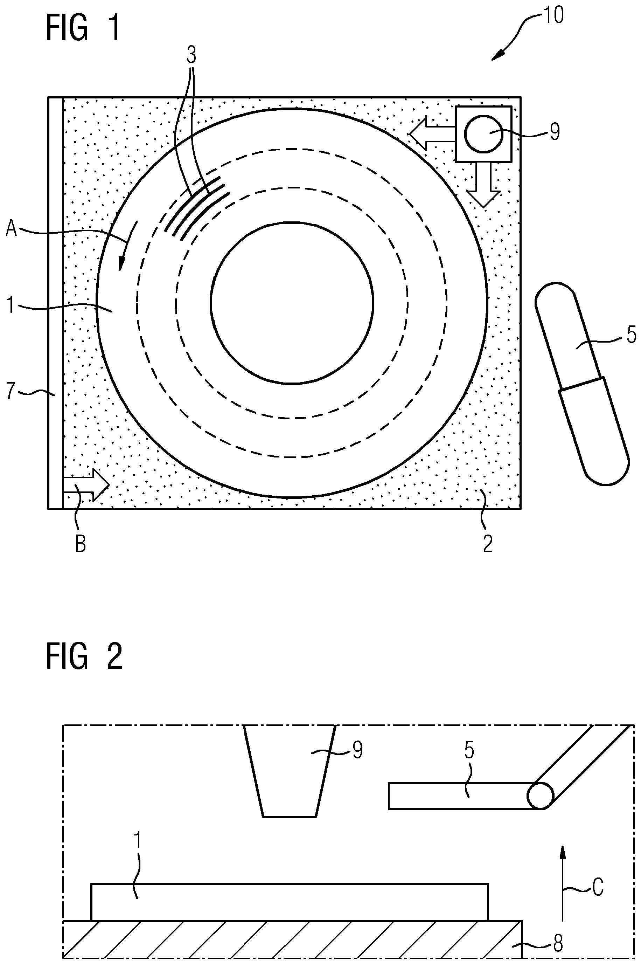

Figur 1 zeigt schematisch eine Aufsicht auf eine Vorrichtung 10. Die Vorrichtung 10 ist eine Vorrichtung zur additiven Herstellung eines Bauteils 1. Die Vorrichtung 10 ist vorzugsweise eine Vorrichtung zum schichtweisen Aufbau eines Bauteils aus einem Pulverbett, beispielsweise eine Vorrichtung zum selektiven Laserschmelzen, wie in Figur 1 dargestellt. Alternativ kann es sich bei der Vorrichtung 10 um eine Vorrichtung zum selektiven Lasersintern und/oder zum Elektronenstrahlschmelzen handeln.

Anhand der Vorrichtung 10 und der Figuren 1 und 2 wird ein erfindungsgemäßes Verfahren zur Herstellung des Bauteils 1 beschrieben.

Das Bauteil 1 ist insbesondere ein Rotorteil einer Strömungsmaschine, wie einer Gasturbine. Vorzugsweise bezeichnet das Bauteil 1 eine Turbinenscheibe, einen Turbinenring oder eine Rotorscheibe eines Kompressors der Turbine.

Die Vorrichtung 10 weist eine Bauplattform 8 (vgl. Figur 2) auf, auf der ein, vorzugsweise pulverförmiges, Ausgangs- oder Basismaterial 2 für das Bauteil 1 angeordnet ist. Das Basismaterial 2 kann beispielsweise ein nickelbasiertes, ein kobaltbasiertes oder ein eisenbasiertes Material sein.

Auf der Bauplattform 8 ist ein Aufbau des Bauteils gezeigt. Insbesondere kann es sich dabei um ein teilweise aufgebautes Bauteil und/oder um das Bauteil während seiner additiven Herstellung handeln. Das Bauteil 1 ist zweckmäßigerweise rotationssymmetrisch oder im Wesentlichen rotationssymmetrisch ausgestaltet. Als Rotorteil einer Strömungsmaschine oder eines Kompressors derselben ist das Bauteil ferner vorzugsweise rotierbar, bspw. relativ zu Statorkomponenten der Strömungsmaschine. Vorzugsweise rotiert das Bauteil während des bestimmungsgemäßen Betriebs der Turbine.

Für den additiven Aufbau weist die Vorrichtung 10 eine Verfestigungseinrichtung 9 auf. Dabei kann es sich um eine Verfestigungseinrichtung des Standes der Technik handeln. Vorzugsweise ist die Verfestigungseinrichtung 9 eine computergesteuerte oder -steuerbare Einheit, welche zum Verfestigen des Basismaterials 2 mit einem Laser oder einer Elektronenstrahleinrichtung (nicht explizit gekennzeichnet) ausgerüstet ist. Für das Verfestigen wird das Basismaterial 2 vorzugsweise zunächst aufgeschmolzen und anschließend erstarrt.

Zur Aufbringung des Basismaterials 2 weist die Vorrichtung 10 eine Beschichtungs- oder Auftragungseinrichtung 7 auf. Dabei kann es sich um eine Rakel handelt, mit welcher das, vorzugsweise pulverförmige, Basismaterial 2 auf der Bauplattform 8 verteilt oder aufgetragen werden kann. Dies kann beispielsweise entlang einer Beschichtungsrichtung B erfolgen.

Als erfindungsgemäßes Element weist die Vorrichtung 10 weiterhin eine Einrichtung 5 auf. Die Einrichtung 5 ist ausgebildet, Materialfasern 3 in den additiven Aufbau für das Bauteil 1 einzubringen, und zwar derart, dass die Materialfasern 3 zumindest im Wesentlichen entlang einer mit dem Bezugszeichen A bezeichneten Umfangsrichtung oder Rotationsrichtung des Bauteils 1 im Betrieb ausgerichtet sind.

Die gestrichelten (konzentrischen) Kreise, welche innerhalb des Bauteils 1 in Figur 1 gezeigt sind, deuten vorzugsweise einen Bereich an in dem die Materialfasern 3 angeordnet und/oder eingebracht werden. Lediglich abschnittsweise sind ebenfalls die Materialfasern dargestellt. Anhand der gezeigten Abschnitte ist zu erkennen, dass die Richtung der Orientierung oder Ausrichtung der Umfangsrichtung A entspricht.

Die Einrichtung 5 ist vorzugsweise weiterhin derart ausgebildet, dass, durch das Einbringen der Materialfasern 3, ein Faserverbundmaterial 4 entsteht, umfassend die Materialfasern 3 und ein verfestigtes Basismaterial oder Matrixmaterial (dieses ist der Einfachheit halber ebenso wie das Basismaterial mit dem Bezugszeichen 2 bezeichnet). Das Faserverbundmaterial 4 kann durch die Materialfasern 3 und das Matrixmaterial gebildet werden.

Die Einrichtung 5 ist vorzugsweise robotergesteuert. Wie in Figur 1 dargestellt kann die Einrichtung 5 einen Roboterarm umfassen welcher in der Abbildung lediglich schematisch angedeutet ist. Dieser Roboterarm ist beispielsweise derart über den Herstellungsraum oder die Bauplattform 8 bzw. das Bauteil 1 schwenkbar, dass die Materialfasern 3 während des additiven Aufbauens des Basismaterials in das Bauteil wie oben beschrieben "eingebaut" werden können. Der genannte Roboterarm kann weiterhin beispielsweise teleskopartig verlängerbar ausgestaltet sein.

Im Rahmen des vorliegenden Verfahrens werden die Materialfasern 3 - mithilfe der Einrichtung 5 - vorzugsweise während des additiven Aufbaus oder der additiven Herstellung des Bauteils 1 in den Aufbau eingebracht, so dass das Faserverbundmaterial 4 entsteht und die die Fasern ebenso wie oben beschrieben ausgerichtet werden. Pro additiv aufgebauter und/oder verfestigter Lage von Basismaterial kann eine Faserlage (vergleiche Figur 1) eingebracht werden. Dies geschieht vorzugsweise bevor das Basismaterial 2 mittels der Beschichtungseinrichtung 7 aufgetragen oder verteilt wird, sodass eine entsprechende Schicht für das Faserverbundmaterial gebildet oder hergestellt werden kann. Vorzugsweise wird das Basismaterial 2 derart aufgetragen und/oder werden die Materialfasern derart eingebracht, dass zwischen den Materialfasern 3 zumindest teilweise Basismaterial 2 angeordnet ist.

Insbesondere können die Materialfasern 3 auch miteinander verwoben werden.

Es ist im Rahmen des beschriebenen Verfahrens auch vorgesehen, dass die Materialfasern, beispielsweise vor dem Einbringen in den Aufbau durch die Einrichtung 5, mit einer Beschichtung (nicht explizit gekennzeichnet) versehen oder beschichtet werden. Bei der Beschichtung kann es sich um eine Gleit- oder Schmierbeschichtung handelt, insbesondere um eine Gleitbewegung der Materialfasern 3 relativ zu dem Matrixmaterial 2 zu ermöglichen, welche wiederum die besonderen mechanischen Eigenschaften des Faserverbundmaterials 4 bewirkt.

Figur 2 zeigt eine schematische Seitenansicht einer Vorrichtung 10. Mit dem Bezugszeichen C ist eine Aufbaurichtung bezeichnet. Als Alternative zu der Ausgestaltung der Vorrichtung aus Figur 1 kann - wie in Figur 2 gezeigt - die Vorrichtung 10 beispielsweise ebenfalls eine Vorrichtung zum Laserauftragschweißen, insbesondere Laserpulverauftragschweißen, sein. Dementsprechend umfasst die Verfestigungseinrichtung 9 hier vorzugsweise sowohl einen Laser (nicht explizit gekennzeichnet) zum Verfestigen des Basismaterials 2 als auch eine Pulverdüse (nicht explizit gekennzeichnet) mit der das Basismaterial 2 bereitgestellt wird.

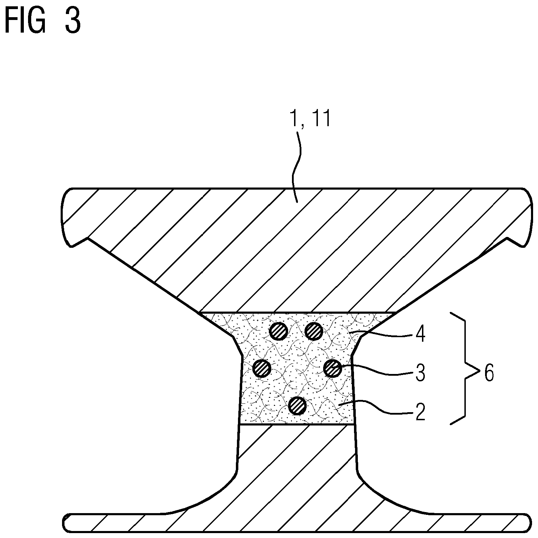

Figur 3 zeigt in einem vereinfachten Querschnitt ein fertig hergestelltes Bauteil 1. Das Bauteil 1 weist einen - im Vergleich zu den übrigen Abschnitten verschmälerten und/oder taillierten zentralen, oder inneren radialen Bereich 6 auf. In diesem Bereich können im Betrieb des Bauteils 1 besonders hohe mechanische Belastungen auftreten. Ein oberer, nicht gekennzeichneter, sich verbreiternder Bereich der Turbinenscheibe 1 ist insbesondere vorgesehen sowohl um Turbinenschaufeln beispielsweise im Betrieb einer Gasturbine an Ort und Stelle zu halten, als auch die Turbinenschaufeln, vorzugsweise durch axiales Ein- oder Ausschieben in die bzw. aus den gebildeten Hohlräume, austauschbar zu machen.

Der zentrale Bereich 6 umfasst das beschriebene Faserverbundmaterial 4. Der zentrale Bereich 6 kann aus dem Faserverbundmaterial 4 bestehen. Insbesondere sind in der Querschnittsdarstellung der Figur 4 in dem Bereich 6 die Materialfasern 3 kreisförmig dargestellt. Das Faserverbundmaterial 4 und/oder das damit versehene Bauteil weist insbesondere - im Vergleich zu einer Turbinenscheibe des Standes der Technik - verbesserte mechanische Eigenschaften, insbesondere eine höhere Bruchdehnung oder Bruchdehn-Belastbarkeit, bspw. um bis zu einem Prozent, auf. Ebenso hat das mit dem beschriebenen Verfahren hergestellte, erfindungsgemäße Bauteil 1 vorzugsweise einen signifikant erhöhten Risswiderstand, eine verbesserte Thermoschockbeständigkeit, als auch beispielsweise verbesserte thermomechanische Eigenschaften.

Weiterhin kann eine Dehnbarkeit oder Dehn-Belastbarkeit des Bauteils 1 relativ zu einem herkömmlichen Rotorteil einer Turbine um 2 % erhöht sein.

Das Faserverbundmaterial 4 kann - durch die Vorgabe der Faserrichtungen - anisotrope und insbesondere dennoch verbesserte mechanische Eigenschaften aufweisen.

Bei dem Bauteil 1 kann es sich insbesondere um eine Rotorscheibe eines Kompressors oder einer Kompressorstufe einer Gasturbine (vorzugsweise in Strömungsrichtung betrachtet vor der Brennkammer der Turbine) handeln. Insbesondere kann das Bauteil 1 eine Kompressor-Rotorscheibe der Materialklasse "26NiCrMoV 14-5" oder "Cost-E (X l 2CrMoWVNbN 10-1-1)" sein. Die beschriebenen Materialfasern 3 können weiterhin eines oder mehrere der folgenden Materialien umfassen: Kohlenstoff, Bor, Basalt und/oder Keramik Aluminiumoxid, beispielsweise Al₂O₃, Mullit, SiBCN, SiCN und SiC.

## Patentansprüche

1. Verfahren zur Herstellung eines Bauteils (1) für eine Strömungsmaschine umfassend die folgenden Schritte:
- additives Aufbauen des Bauteils mittels eines additiven Herstellungsverfahrens aus einem Basismaterial (2) für das Bauteil (1) und
- Einbringen von Materialfasern (3) in einen Aufbau für das Bauteil (1) während des additiven Aufbauens derart, dass die Materialfasern (3) entlang einer Umfangsrichtung (A) des Bauteils (1) um eine Bauteilachse ausgerichtet sind und derart, dass ein Faserverbundmaterial (4) entsteht, umfassend die Materialfasern (3) und ein durch das additive Aufbauen verfestigtes Basismaterial (2), wobei die Materialfasern (3) Keramik aus Aluminiumoxid, Mullit, SiBCN, SiCN oder SiC, umfassen.

2. Verfahren gemäß Anspruch 1, wobei die Materialfasern (3) durch eine robotergesteuerte Einrichtung (5) eingebracht werden.

3. Verfahren gemäß Anspruch 1 oder 2, wobei die Materialfasern (3) entlang einer Aufbaurichtung (C) des Bauteils (1) betrachtet lediglich in einem zentralen Bereich (6) des Bauteils (1) eingebracht werden.

4. Verfahren gemäß einem der vorhergehenden Ansprüche, wobei das additive Herstellungsverfahren selektives Laserschmelzen, selektives Lasersintern, Elektronenstrahlschmelzen oder Laserauftragschweißen ist.

5. Verfahren gemäß einem der vorhergehenden Ansprüche, wobei das Basismaterial (2) zumindest teilweise zwischen den Materialfasern (3) angeordnet wird.

6. Verfahren gemäß einem der vorhergehenden Ansprüche, wobei die Materialfasern (3) vor dem Einbringen mit einer Beschichtung (12) versehen werden.

## Claims

1. Method for producing a component (1) for a turbomachine, comprising the following steps:
- additive build up of the component by means of an additive production method from a base material (2) for the component (1) and
- introduction of material fibers (3) into a construction for the component (1) during the additive build up in such a way that the material fibers (3) are oriented along a circumferential direction (A) of the component (1) around a component axis and in such a way that a fiber composite material (4) is created, the fiber composite material comprising the material fibers (3) and a base material (2) which is solidified as a result of the additive build up, wherein the material fibers (3) comprise ceramic material consisting of aluminum oxide, mullite, SiBCN, SiCN or SiC.

2. Method according to Claim 1, wherein the material fibers (3) are introduced by means of a robot-controlled appliance (5).

3. Method according to Claim 1 or 2, wherein the material fibers (3) are introduced only in a central region (6) of the component (1), as seen along a build-up direction (C) of the component (1).

4. Method according to one of the preceding claims, wherein the additive production method is selective laser melting, selective laser sintering, electron beam melting or laser deposition welding.

5. Method according to one of the preceding claims, wherein the base material (2) is arranged at least partially between the material fibers (3).

6. Method according to one of the preceding claims, wherein the material fibers (3) are provided with a coating (12) before introduction.

## Revendications

1. Procédé de fabrication d'une pièce (1) d'une turbomachine comprenant les stades suivants :
- construction additive de la pièce au moyen d'un procédé de fabrication additif en un matériau (2) de base pour la pièce (1) et
- introduction de fibres (3) de matériau dans une structure pour la pièce (1) pendant la constitution additive de manière à diriger les fibres (3) de matériau autour d'un axe de la pièce suivant une direction (A) de pourtour de la pièce (1) et de manière à créer un matériau (4) composite à fibres, comprenant les fibres (3) de matériau et un matériau (2) de base consolidé par la constitution additive, les fibres (3) de matériau comprenant de la céramique en oxyde d'aluminium, en mullite, en SiBCN, en SiCN ou en SiC.

2. Procédé suivant la revendication 1, dans lequel on introduit les fibres (3) de matériau par un dispositif (5) commandé par robot.

3. Procédé suivant la revendication 1 ou 2, dans lequel on introduit les fibres (3) de matériau, considéré suivant une direction (C) de constitution de la pièce (1), dans une partie (6) centrale de la pièce (1).

4. Procédé suivant l'une des revendications précédentes, dans lequel le procédé de fabrication additif est une fusion laser sélective, un frittage laser sélectif, une fusion par faisceau d'électrons ou un soudage avec dépôt au laser.

5. Procédé suivant l'une des revendications précédentes, dans lequel on met le matériau (2) de base au moins en partie entre les fibres (3) de matériau.

6. Procédé suivant l'une des revendications précédentes, dans lequel on munit avant l'introduction les fibres (3) de matériau d'un revêtement (12).
